# EUROPÄISCHE PATENTSCHRIFT

(11) **EP 1 885 571 B1**
(45) Veröffentlichungstag und Bekanntmachung des Hinweises auf die Patenterteilung: **14.10.2009**
(21) Anmeldenummer: 06705868.5
(22) Anmeldetag: 30.01.2006
(51) Int. Cl.: B60J 7/00, E06B 9/42

(54) **VERDUNKELUNGSVORRICHTUNG MIT AUFROLLBARER ROLLOBAHN FÜR EINE LICHTDURCHLÄSSIGE SCHEIBE**
DARKENING DEVICE COMPRISING A ROLLER BLIND FOR A LIGHT-PERMEABLE WINDOW
DISPOSITIF D'OBSCURCISSEMENT DOTE D'UN STORE ROULANT POUR UNE VITRE TRANSPARENTE

(30) Priorität: 31.01.2005 FR 0500926
(43) Veröffentlichungstag der Anmeldung: 13.02.2008
(73) Patentinhaber: Webasto AG, 82131 Stockdorf (DE)
(72) Erfinder: SERNEELS, Marc, F-13100 Aix-en-Provence (FR)
(74) Vertreter: advotec.
(86) Internationale Anmeldenummer: PCT/DE2006/000138
(87) Internationale Veröffentlichungsnummer: WO 2006/079332

(56) Entgegenhaltungen:
- EP-A- 1 127 722
- WO-A-98/00302
- DE-A1- 10 019 644
- DE-C1- 19 745 866
- FR-A- 955 218
- FR-A- 2 865 438
- FR-A- 2 866 274
- GB-A- 828 513
- US-A- 2 973 990
- US-B1- 6 186 587

## Beschreibung

Die vorliegende Erfindung betrifft eine Vorrichtung, die dazu bestimmt ist, eine oder mehrere lichtdurchlässige Scheiben mittels einer aufrollbaren Rollobahn mindestens teilweise abzudunkeln.

Die Erfindung findet eine besonders vorteilhafte, jedoch nicht ausschließliche Anwendung auf dem Gebiet der Kraftfahrzeuge.

Heute werden immer mehr Dächer von Kraftfahrzeugen mit lichtdurchlässigen, d.h. transparenten oder durchscheinenden Scheiben ausgestattet. Es handelt sich im Allgemeinen entweder um ein Schiebedachsystem, dessen bewegliche Scheibe aus Glas ausgeführt wird, oder um eine feste Scheibe aus Glas, die direkt einen mehr oder weniger großen Teil des Fahrzeughimmels bildet.

Unabhängig von der in Aussicht genommenen Ausführungsform wird diese Art von mehr oder weniger transparenter Scheibe in der Praxis systematisch in Kombination mit einer Lichtabdunkelung verwendet, welche geeignet ist, parallel zur Innenfläche der Glasscheibe ausgefahren zu werden. Die Aufgabe einer solchen Vorrichtung ist es, zu verhindern, dass die Lichtstrahlen, die durch die Glasscheibe eindringen, sich im Inneren des Fahrgastraums verbreiten. Ziel ist dabei natürlich, den Treibhauseffekt im Inneren des Kraftfahrzeuges insbesondere an Tagen mit starker Sonneneinstrahlung zu begrenzen.

Zu den nach dem Stand der Technik an sich bekannten Verdunkelungsvorrichtungen gehören die Vorrichtungen, die ihre Aufgabe durch den Einsatz einer aufrollbaren Rollobahn erfüllen. Schematisch ausgedrückt wird eine mehr oder weniger lichtdurchlässige Textilbahn für die Verschiebung relativ zu einem abzudunkelnden Bereich zwischen einer Aufnahmeposition und einer ausgefahrenen Position beweglich montiert. Genauer gesagt werden die beiden entgegengesetzten Enden der Textilbahn jeweils mit einem von dem abzudunkelnden Bereich beabstandet angeordneten, für die axiale Rotation beweglich montierten Aufrollrohr und einer für die Verschiebung längs des genannten abzudunkelnden Bereiches beweglich montierten Zugstange fest verbunden. Das Ganze ist in der Weise ausgestaltet, dass die Textilbahn in der Aufnahmeposition auf ein Aufwickelrohr bzw. Aufrollrohr aufgerollt wird und dass die Textilbahn sich in der ausgefahrenen Position unterhalb des abzudunkelnden Bereiches erstreckt.

Es kann sich manchmal als vorteilhaft erweisen, dass die Textilbahn in Längsrichtung und/oder in Querrichtung in dem abzudunkelnden Bereich gestützt werden kann. Dies ist insbesondere dann der Fall, wenn die Scheibe große Abmessungen aufweist, um jenes "Hängematten"-Phänomen unter der Einwirkung des Eigengewichts der Textilbahn zu vermeiden und so die Effizienz und das rein ästhetische Aussehen der Verdunkelungsvorrichtung zu garantieren. Dies ist aber auch dann der Fall, wenn die abzudunkelnde Scheibe eine signifikante Krümmung aufweist, um sich bestmöglich an die Innenseite der Scheibe anzupassen und somit die Raumausnutzung im Inneren des Fahrzeuges zu optimieren.

Unabhängig davon ist es für die Ausführung einer solchen Abstützung bekannt, die Textilbahn mit einer oder mehreren Querverstärkungen zu versehen, die die Besonderheit aufweisen, relativ steif, aber auch geeignet zu sein, zwischen zwei beiderseits des abzudunkelnden Bereiches in Längsrichtung angeordneten Führungsschienen zu gleiten. Das bloße Vorhandensein der mit der Textilbahn fest verbundenen Querverstärkungen ist ausreichend, um die angestrebte Abstützung in Querrichtung zu erhalten. Und wenn dies mit der Verwendung von im Wesentlichen zur Krümmung in Längsrichtung der abzudunkelnden Scheibe parallel gewölbten Führungsschienen kombiniert ist, gestattet es dies in vorteilhafter Weise, die gewünschte Abstützung in Längsrichtung auszuführen. Es ist anzumerken, dass aufgrund der Tatsache, dass die Querverstärkungen mit der Textilbahn insbesondere mittels Überzügen fest verbunden sind, diese in der Lage sind, zusammen mit ihr einerseits im abzudunkelnden Bereich zu gleiten und sich andererseits zusammen mit ihr um das Aufrollrohr aufzuwickeln.

Diese Art von Verdunkelungsvorrichtung weist jedoch den Nachteil auf, für Glasscheiben von komplexer Form und insbesondere diejenigen nicht geeignet zu sein, die zusätzlich zu der klassischen Krümmung in Längsrichtung eine Krümmung in Querrichtung aufweisen. In der Tat kombinieren die an sich bekannten Verdunkelungsvorrichtungen nach dem Stand der Technik üblicherweise geradlinige Verstärkungen mit zylindrischen Aufrollrohren in Verbindung mit Führungsschienen, die in Längsrichtung gekrümmt sein können. Wenn nun auch die Biegung der Führungsschienen es ermöglicht, der Krümmung in Längsrichtung einer Scheibe mit komplexer Oberfläche ziemlich genau zu folgen, gestattet es der geradlinige Verlauf der Querverstärkungen andererseits in keinem Fall, sich so weitgehend wie möglich an die Krümmung der genannten Scheibe in Querrichtung anzupassen. Dies erhöht demzufolge in signifikanter Weise den Platzbedarf der Verdunkelungsvorrichtung in seinem gekrümmten Teil, wenn die Textilbahn vollständig unterhalb der Scheibe ausgefahren ist, was sich schlussendlich für die Kopffreiheit des Kraftfahrzeuges, in dem die genannte Verdunkelungseinrichtung montiert wird, als besonders beeinträchtigend erweist.

Aus der Druckschrift US 6,186,587 B1 ist eine Verdunkelungsvorrichtung für ein Kraftfahrzeug mit den Merkmalen des Oberbegriffs des Patentanspruches 1 bekannt. Diese Verdunkelungsvorrichtung umfasst eine Textilbahn, die zwischen einer auf ein Aufrollrohr aufgerollten Freigabestellung und einer von diesem abgewickelten Schließstellung verstellbar ist, sowie mehrere Querverstärkungen, welche mit der Textilbahn verbunden sind und über Gleiter in beidseits der Textilbahn angeordneten Führungsschienen in Fahrzeuglängsrichtung verschiebbar geführt sind. Die Querverstrebungen sind in Schließstellung der Textilbahn jeweils bezogen auf ihre Längsrichtung, d.h. bezogen auf die Fahrzeugquerrichtung in Richtung Dachaußenseite gebogen und können mit ihrer Unterseite, d.h. mit ihrem konkaven Teil an die Textilbahn angebunden sein. Der konkave Teil der jeweiligen Querverstärkung ist nach unten gerichtet, d.h. von einem lichtdurchlässigen Schiebedachdeckel abgewandt, wenn sich die entsprechende Querverstärkung unterhalb des abzudunkelnden Bereichs befindet. Die Wölbung der Querverstärkung wird durch Ausüben eines Drucks mittels Steuerflächen erzeugt, die jeweils aus mehreren Abschnitten bestehen und auf einen im Bereich des jeweiligen Gleiters angeordneten Endbereich der jeweiligen Querverstärkung wirken. Im auf das Aufrollrohr aufgewickelten Zustand der Textilbahn sind Querverstärkungen gerade gestreckt. Damit die Textilbahn die durch die Steuerflächen erzeugte Wölbung aufnehmen kann, ist ihr eine gewisse Elastizität zuzumessen.

Entsprechend ist das durch den Gegenstand der vorliegenden Erfindung zu lösende technische Problem, eine Verdunkelungsvorrichtung einer lichtdurchlässigen Scheibe vorzuschlagen, die einerseits eine Textilbahn, die für die Verschiebung zwischen einer Aufnahmeposition, in der sie auf ein von einem abzudunkelnden Bereich beabstandet angeordnetes, für die axiale Rotation beweglich montiertes Aufrollrohr aufgerollt wird, und einer ausgefahrenen Position, in der sie sich unterhalb des abzudunkelnden Bereiches erstreckt, beweglich montiert ist, und andererseits mindestens eine Querverstärkung aufweist, die mit der Textilbahn fest verbunden ist und zwischen zwei beiderseits des abzudunkelnden Bereiches angeordneten Führungsschienen gleiten kann, wobei die Verdunkelungsvorrichtung es erlauben würde, die Probleme nach dem Stand der Technik zu vermeiden, indem insbesondere in der ausgefahrenen Position eine beträchtlich verbesserte Kompaktheit geboten wird.

Die Lösung des gestellten technischen Problems besteht erfindungsgemäß darin, dass die Textilbahn elastisch ist, dass jede Querverstärkung in Längsrichtung gewölbt ist und dass die Textilbahn mit dem konkaven Teil jeder gewölbten Querverstärkung fest verbunden ist, wobei jeder konkave Teil relativ zur lichtdurchlässigen Scheibe entgegengesetzt angeordnet ist, wenn die entsprechende Querverstärkung sich unterhalb des abzudunkelnden Bereiches befindet. Das Aufrollrohr weist eine Konkave zylindrische Wand auf, und jede Querverstärkung ist steif.

Die so definierte Erfindung bietet den Vorteil, einen wesentlich geringeren Platzbedarf zu ermöglichen, da die Abstützung der Textilbahn durch gewölbte Verstärkungen realisiert wird, deren Krümmung in Längsrichtung im Wesentlichen zur Krümmung der abzudunkelnden Scheibe in Querrichtung identisch ist. Die Textilbahn kann sich also so weitgehend wie möglich an die Form der abzudunkelnden Scheibe anpassen, dies insbesondere in dem gewölbten Teil, was zugunsten der Kopffreiheit des Kraftfahrzeuges Raum freigibt.

Diese als nicht einschränkendes Beispiel gegebene Beschreibung macht besser verständlich, aus was die Erfindung besteht und wie sie realisiert werden kann. Sie wird im Übrigen unter Bezugnahme auf die beigefügten Zeichnungen 1-3 gegeben, in denen
Fig. 1 eine Seitenansicht mit der schematischen Darstellung einer Verdunkelungsvorrichtung nach einer ersten erfindungsgemäßen Ausführungsform ist, wobei die Textilbahn in ausgefahrener Position dargestellt ist;
Fig. 2 eine zur Fig. 1 ähnliche Darstellung ist, wobei sich die Textilbahn jedoch in der Aufnahmeposition befindet;
Fig. 3 die Verdunkelungsvorrichtung nach Fig. 2 im Querschnitt zeigt.
Fig. 4 eine Seitenansicht darstellt, die schematisch eine Verdunkelungsvorrichtung nach einer zweiten nicht erfindungsgemäßen Ausführungsform zeigt, wobei die Textilbahn in ausgefahrener Position dargestellt ist;
Fig. 5 eine zur Fig. 4 ähnliche Darstellung zeigt, wobei sich die Textilbahn jedoch in der Aufnahmeposition befindet;
Fig. 6 die Verdunkelungsvorrichtung nach Fig. 5 im Querschnitt zeigt.

Aus Gründen der Klarheit werden die jeweils gleichen Bestandteile mit identischen Bezugszeichen bezeichnet. Des Weiteren werden lediglich die für das Verständnis der Erfindung wesentlichen Bestandteile dargestellt, wobei dies auch nicht maßstabsgerecht und nur in schematischer Form erfolgte.

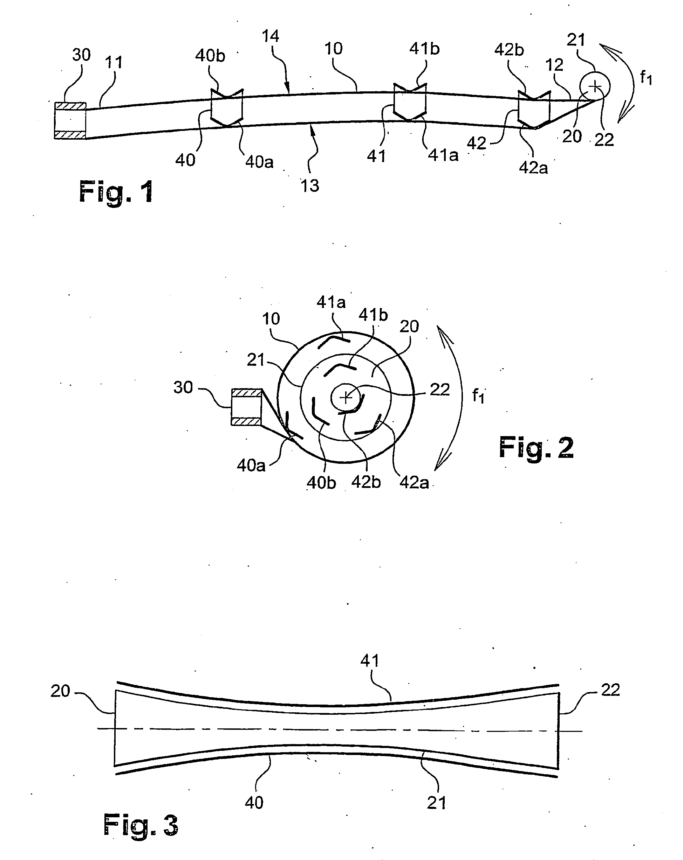

Die Figuren 1 bis 3 zeigen eine Verdunkelungsvorrichtung 1, die dazu bestimmt ist, im Inneren des Fahrgastraums eines Kraftfahrzeuges mit dem Ziel fest verbunden zu werden, eine Glasscheibe abzudunkeln, die mit dem oberen Teil der Karosserie fest verbunden ist und das Fahrzeugdach bildet.

Anzumerken ist, dass im vorliegenden Fall der abzudunkelnde Bereich durch den wirklich lichtdurchlässigen Teil der Glasscheibe, also denjenigen Teil gebildet wird, der tatsächlich Lichtstrahlen in das Innere des Fahrgastraums eintreten lässt und der demzufolge nicht im Bereich eines beliebigen Teils der Karosserie oder eines beliebigen Bestandteils der Innenausstattung angeordnet ist.

Unabhängig davon ist die Verdunkelungsvorrichtung 1 zunächst mit einer lichtundurchlässigen Textilbahn 10 versehen, deren beiden entgegengesetzten Enden 11, 12 jeweils einerseits mit einem vom abzudunkelnden Bereich beabstandet angeordneten, für die Axialrotation beweglich montierten Aufwickelrohr bzw. Aufrollrohr 20 (Pfeil f₁) und andererseits mit einer für die Verschiebung längs des genannten abzudunkelnden Bereiches beweglich montierten Zugstange 30 fest verbunden sind.

Es ist anzumerken, dass das Aufrollrohr 20 nicht vollständig in der Axialrotation frei beweglich montiert ist, da es mit einer Torsionsfeder gekoppelt ist, die es ständig in der Aufrollrichtung der Textilbahn 10 beaufschlagt. Ziel ist, die Textilbahn 10 zwischen der Zugstange 30 und dem Aufrollrohr 20 in Längsrichtung zu spannen, wenn die Textilbahn 10 ausgefahren wird.

Um parallel zur Innenfläche der Glasscheibe ausgefahren werden zu können, ist die Textilbahn 10 für die Verschiebung zwischen einer Aufnahmeposition, in der sie um das Aufrollrohr 20 (Fig. 2) aufgerollt wird, und einer ausgefahrenen Position, in der sie sich unterhalb des abzudunkelnden Bereiches (Fig. 1) erstreckt, beweglich montiert.

Die Verdunkelungsvorrichtung 1 ist des Weiteren mit drei Querverstärkungen 40, 41, 42 versehen, die mit der Textilbahn 10 fest verbunden sind und zwischen zwei jeweils beiderseits des abzudunkelnden Bereiches in Längsrichtung angeordneten Führungsschienen gleiten können, die hier jedoch aus Gründen der Klarheit nicht dargestellt werden. In an sich bekannter Weise ist die Aufgabe der Querverstärkungen 40, 41, 42, die Textilbahn 10 auf der Höhe des abzudunkelnden Bereiches in Längs- und in Querrichtung abzustützen.

Es ist anzumerken, dass in den Figuren 1 und 2 jede Querverstärkung 40, 41, 42 in sehr schematischer Weise dargestellt wurde, da eines ihrer Enden 40a, 41a, 42a und ihr zentraler Teil 40b, 41b, 42b gleichzeitig dargestellt wurden, um die Krümmung in Längsrichtung der genannten Querverstärkung 40, 41, 42 gut sichtbar werden zu lassen, obwohl letztere in der Richtung ihrer größten Länge betrachtet wird. Diese Art der Darstellung ermöglicht es in jedem Fall, dass in Fig. 1 klar die Seitenkante 13 und der Mittelteil 14 der Textilbahn 10 unterschieden werden.

Entsprechend dem Gegenstand der vorliegenden Erfindung ist die Textilbahn 10 elastisch, so dass sie sich reversibel verlängern und damit jede komplexe Form annehmen kann, die durch die Form und/oder die Positionierung der verschiedenen Querverstärkungen 40, 41, 42 vorgegeben wird. Im Übrigen ist jede Querverstärkung 40, 41, 42 in Längsrichtung gewölbt, um sich bestmöglich an die Krümmung in Querrichtung der abzudunkelnden Glasscheibe anpassen zu können. Außerdem ist die Textilbahn 10 mit dem konkaven Teil jeder gewölbten Querverstärkung 40, 41, 42 fest verbunden. Das Ganze ist schließlich in der Weise ausgestaltet, dass der konkave Teil jeder Querverstärkung 40, 41, 42 dann relativ zur Glasscheibe entgegengesetzt ausgerichtet ist, wenn die Querverstärkung 40, 41, 42 sich unterhalb des abzudunkelnden Bereiches erstreckt.

Es ist anzumerken, dass die Textilbahn 10 hier durch ein lichtundurchlässiges elastisches Textilmaterial gebildet wird. Natürlich könnte jedoch jedes andere dehnbare Material, das seine anfängliche Form nach jeder Verformungsbeanspruchung wieder einzunehmen vermag, in äquivalenter Weise eingesetzt werden.

Bei dieser ersten Ausführungsform der Erfindung ist jede Querverstärkung 40, 41, 42 im Prinzip steif. Im Übrigen weist entsprechend Fig. 3 das Aufrollrohr 20 eine konkave zylindrische Wand 21 auf.

Mit anderen Worten weisen jede Querverstärkung 40, 41, 42 und das Aufrollrohr 20 Formen auf, welche in Längsrichtung zumindest teilweise ineinander eingreifen können. Diese Eigenschaft ermöglicht eine weitere Verbesserung der Kompaktheit der Verdunkelungsvorrichtung 1 in der Aufnahmeposition (Fig. 2).

Bei dieser besonderen, lediglich als Bespiel gezeigten Ausführungsform ist die Konkavität der zylindrischen Wand 21, insbesondere bezogen auf die Rotationsachse 22 des Aufrollrohrs 20, vollkommen symmetrisch.

In besonders vorteilhafter Weise weist die konkave zylindrische Wand 21 des Aufrollrohrs 20 eine Krümmung in Längsrichtung auf, die im Wesentlichen zur Krümmung jeder Querverstärkung 40, 41, 42 identisch ist.

Dies bedeutet, dass jede Querverstärkung 40, 41, 42 und das Aufrollrohr 20 Formen aufweisen, die in Längsrichtung im Wesentlichen komplementär sind. Jede Querverstärkung 40, 41, 42 kann entsprechend gegen das Aufrollrohr ohne elastische Verformung und auch ohne besondere mechanische Beanspruchung aufgerollt werden.

Nach einem weiteren vorteilhaften Merkmal dieser ersten Ausführungsform der Erfindung erfolgt das Aufrollen der Textilbahn 10 um das Aufrollrohr 20 von unten (Figuren 1 und 2).

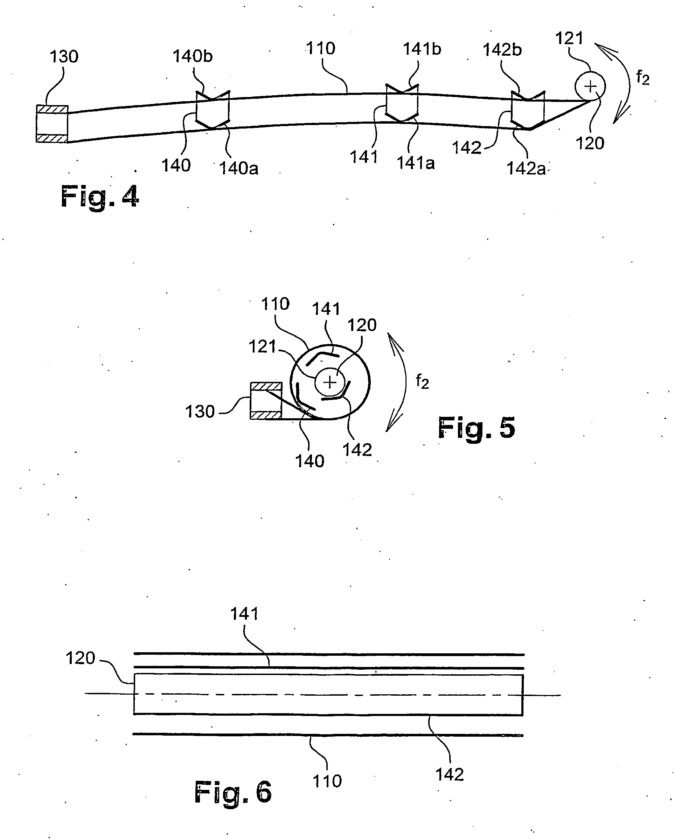

Die Figuren 4 bis 6 zeigen ihrerseits eine Verdunkelungsvorichtung 100, die einer zweiten nicht erfindungsgemäßen Ausführungsform entspricht. Diese unterscheidet sich von der ersten vorstehend beschriebenen im Wesentlichen durch die Tatsache, dass jede Querverstärkung 140, 141, 142 hier elastisch verformbar ist, während das Aufwickelrohr bzw. Aufrollrohr 120 eine gerade zylindrische Wand aufweist, wie dies klar aus Fig. 6 ersichtlich ist.

Es wird zunächst bemerkt, dass die Hinweise, die hinsichtlich der schematischen Darstellung der Querverstärkungen 140, 141, 142 gegeben werden können, zu denjenigen identisch sind, die im Rahmen der Beschreibung der ersten Ausführungsform der Erfindung formuliert wurden.

Nach einer Besonderheit dieser zweiten nicht erfindungsgemäßen Ausführungsform weist die Verdunkelungsvorrichtung 100 Ausrichtmittel auf, welche in der Lage sind, jede Querverstärkung 140, 141, 142 dazu zu zwingen, sich im Laufe des Aufrollens der Textilbahn 110 um das Aufrollrohr 120 zu verformen und eine im Wesentlichen lineare Form anzunehmen, welche sich in im Wesentlichen zur zylindrischen Wand des genannten Aufrollrohrs 120 paralleler Weise zu erstrecken vermag, wie dies insbesondere aus Fig. 6 ersichtlich ist.

Es wird jedoch darauf hingewiesen, dass in Ruhestellung und entsprechend dem Gegenstand der vorliegenden Vorrichtung jede Querverstärkung 140, 141, 142 natürlich eine gewölbte Form aufweist, wie diejenige, die in Fig. 3 für ihr Gegenstück der ersten erfindungsgemäßen Ausführungsform ersichtlich ist.

Nach einer ersten Variante der genannten zweiten nicht erfindungsgemäßen Ausführungsform erfolgt das Aufrollen der Textilbahn 110 um das Aufrollrohr 120 von unten. Im Übrigen sind die Ausrichtmittel in der Lage, die Enden 140a, 141a, 142a jeder Querverstärkung 140, 141, 142 der zylindrischen Wand 121 des Aufrollrohrs 120 aneinander anzunähern, wenn der Mitteilteil 140b, 141b, 142b der genannten Querverstärkung 140, 141, 142 sich gegen das genannte Aufrollrohr 120 abstützt.

Es ist anzumerken, dass das Abstützen des Mittelteils 140b, 141b, 142b jeder Querverstärkung 140, 141, 142 an die zylindrische Wand 121 des Aufrollrohrs 120, je nachdem, ob mehrere Windungen der Textilbahn 110 zwischen diesen beiden Arten von Bauteilen eingelegt sind oder nicht, indirekt oder direkt erfolgen kann.

Bei dieser ersten Ausführungsvariante werden, obwohl dies hier nicht dargestellt wird, die Ausrichtmittel durch zwei kreisförmige Führungsanschläge gebildet, die jeweils in der Nähe der beiden Enden des Aufrollrohrs 120 positioniert sind. Das Ganze ist im Übrigen in der Weise ausgestaltet, dass die genannten beiden kreisförmigen Führungsanschläge in der Lage sind, die Verschiebung der Enden 140a, 141a, 142a jeder Querverstärkung 140, 141, 142 bei dem Aufrollen der Textilbahn 110 entsprechend einer Kreisbahn auszurichten, die im Wesentlichen derjenigen entspricht, die von dem Mittelteil 140b, 141b, 142b der genannten Querverstärkung 140, 141, 142 beschrieben wird.

Nach einer zweiten Variante der zweiten nicht erfindungsgemäßen Ausführungsform, die nicht dargestellt wird, kann das Aufrollen der Textilbahn 110 um das Aufrollrohr 120 von oben erfolgen. In diesem Fall müssen die Ausrichtmittel in der Lage sein, den Mitteilteil 140b, 141b, 142b jeder Querverstärkung 140, 141, 142 an die zylindrische Wand 121 des Aufrollrohrs 120 anzunähern, wenn die Enden 140a, 141a, 142a der genannten Querverstärkung 140, 141, 142 an dem genannten Aufrollrohr 120 anliegen.

Das Ganze kann insbesondere in der Weise ausgestaltet werden, dass das Aufrollen der Textilbahn 110 um das Aufrollrohr 120 eine Druckkraft zu erzeugen vermag, welche in der Lage ist, den Mittelteil 140b, 141b, 142b jeder Querverstärkung 140, 141, 142 gegen die zylindrische Wand 121 des Aufrollrohrs 120 zu pressen, wobei die Textilbahn 110 dann Ausrichtmittel bildet.

Diese zweite nicht erfindungsgemäßen Ausführungsform bietet den Vorteil, den Platzbedarf der Verdunkelungsvorrichtung 100 im Aufroll- und Aufnahmebereich der Textilbahn 110 zu reduzieren. Das verwendete Aufrollrohr 120 ist in der Tat von gerader Form, und die Enden 140a, 141a, 142a jeder dazugehörigen Querverstärkung 140, 141, 142 sind längs ihrer zylindrischen Fläche 121 fluchtig angeordnet. Das besagte Aufrollrohr 120 erweist sich im Übrigen als einfach auszuführen.

Wie aus den Figuren 1, 2, 4 und 5 ersichtlich ist, ist jede Querverstärkung 40, 41, 42, 140, 141, 142 in Querrichtung gewölbt und weist eine Krümmung in Querrichtung auf, die im Wesentlichen zu derjenigen des Aufrollrohrs komplementär ist (Figuren 2 und 5).

Dieses Merkmal ermöglicht ein Optimieren des Eingreifens zwischen jeder Querverstärkung 40, 41, 42, 140, 141, 142 und dem damit verbundenen Aufrollrohr 20, 120, wenn die Textilbahn 10, 110 in der Aufnahmeposition befindlich ist.

Natürlich betrifft die Erfindung auch ganz allgemein ein Kraftfahrzeug, das mit mindestens einer Verdunkelungsvorrichtung 1 wie vorstehend beschrieben ausgestattet ist.

## Patentansprüche

1. Verdunkelungsvorrichtung (1) einer lichtdurchlässigen Scheibe, die einerseits eine Textilbahn (10), die für die Verschiebung zwischen einer Aufnahmeposition, in der sie um ein von dem abzudunkelnden Bereich beabstandet angeordnetes, für die axiale Rotation beweglich montiertes Aufrollrohr (20) aufgerollt wird, und einer ausgefahrenen Stellung, in der sie sich unterhalb des abzudunkelnden Bereiches erstreckt, beweglich montiert ist, und andererseits mindestens eine Querverstärkung (40, 41, 42) aufweist, welche mit der Textilbahn (10) fest verbunden ist und zwischen zwei beiderseits des abzudunkelnden Bereiches angeordneten Führungsschienen gleiten kann, wobei die Textilbahn (10) elastisch ist, jede Querverstärkung (40, 41, 42) in ihre Längsrichtung gewölbt ist und die Textilbahn (10) mit dem konkaven Teil jeder gewölbten Querverstärkung (40, 41, 42) fest verbunden ist, wobei jeder konkave Teil relativ zur lichtdurchlässigen Scheibe entgegengesetzt ausgerichtet ist, wenn sich die entsprechende Querverstärkung (40, 41, 42) unterhalb des abzudunkelnden Bereiches befindet, **dadurch gekennzeichnet, dass** das Aufrollrohr (20) eine konkave zylindrische Wand (21) aufweist, und dass die Querverstärkung (40, 41, 42) im Wesentlichen steif ist.

2. Verdunkelungsvorrichtung (1) nach Anspruch 1, **dadurch gekennzeichnet, dass** die konkave zylindrische Wand (21) des Aufrollrohrs (20) eine Krümmung in Längsrichtung aufweist, die im Wesentlichen zur Krümmung der Querverstärkung (40, 41, 42) in Längsrichtung identisch ist.

3. Verdunkelungsvorrichtung (1) nach einem der Ansprüche 1 oder 2, **dadurch gekennzeichnet, dass** das Aufrollen der Textilbahn (10) um das Aufrollrohr (20) von unten erfolgt.

4. Kraftfahrzeug, **dadurch gekennzeichnet, dass** es mindestens eine Verdunkelungsvorrichtung (1) nach einem der vorstehenden Patentansprüche aufweist.

## Claims

1. Shading device (1) for a light-permeable window, which comprises, on the one hand, a textile web (10) which is movably mounted for displacement between a stowed position, in which it is rolled up around a roll-up tube (20) which is arranged at a distance from the region to be shaded and which is movably mounted for axial rotation, and an extended position in which it extends below the region to be shaded, and, on the other hand, at least one transverse reinforcement (40, 41, 42) which is fixedly connected to the textile web (10) and can slide between two guide rails arranged on both sides of the region to be shaded, wherein the textile web (10) is elastic, each transverse reinforcement (40, 41, 42) is curved in its longitudinal direction, and the textile web (10) is fixedly connected to the concave part of each curved transverse reinforcement (40, 41, 42), wherein each concave part is oriented oppositely relative to the light-permeable window when the corresponding transverse reinforcement (40, 41, 42) is situated below the region to be shaded, **characterized in that** the roll-up tube (20) has a concave cylindrical wall (21), and **in that** the transverse reinforcement (40, 41, 42) is substantially rigid.

2. Shading device (1) according to Claim 1, **characterized in that** the concave cylindrical wall (21) of the roll-up tube (20) has a curvature in the longitudinal direction which is substantially identical to the curvature of the transverse reinforcement (40, 41, 42) in the longitudinal direction.

3. Shading device (1) according to either of Claims 1 and 2, **characterized in that** the textile web (10) is rolled up around the roll-up tube (20) from below.

4. Motor vehicle, **characterized in that** it comprises at least one shading device (1) according to one of the preceding patent claims.

## Revendications

1. Dispositif d'obscurcissement (1) d'une vitre transparente, qui comprend d'une part une bande textile (10), qui est montée de façon mobile en vue d'un déplacement entre une position de rangement, dans laquelle elle est enroulée autour d'un tube d'enroulement (20) monté de façon mobile pour la rotation axiale et disposé à distance de la zone à obscurcir, et une position étendue, dans laquelle elle s'étend en dessous de la zone à obscurcir, et d'autre part au moins un renfort transversal (40, 41, 42), qui est solidaire de la bande textile (10) et qui peut glisser entre deux rails de guidage disposés de part et d'autre de la zone à obscurcir, dans lequel la bande textile (10) est élastique, chaque renfort transversal (40, 41, 42) est courbé dans sa direction longitudinale et la bande textile (10) est solidaire de la partie concave de chaque renfort transversal courbé (40, 41, 42), dans lequel chaque partie concave est orientée à l'opposé de la vitre transparente lorsque le renfort transversal correspondant (40, 41, 42) se trouve en dessous de la zone à obscurcir, **caractérisé en ce que** le tube d'enroulement (20) présente une paroi cylindrique concave (21), et **en ce que** le renfort transversal (40, 41, 42) est essentiellement rigide.

2. Dispositif d'obscurcissement (1) selon la revendication 1, **caractérisé en ce que** la paroi cylindrique concave (21) du tube d'enroulement (20) présente une courbure en direction longitudinale, qui est essentiellement identique à la courbure du renfort transversal (40, 41, 42) en direction longitudinale.

3. Dispositif d'obscurcissement (1) selon l'une quelconque des revendications 1 ou 2, **caractérisé en ce que** l'enroulement de la bande textile (10) autour du tube d'enroulement (20) est effectué par le bas.

4. Véhicule automobile, **caractérisé en ce qu'**il présente au moins un dispositif d'obscurcissement (1) selon l'une quelconque des revendications précédentes.
